# EUROPEAN PATENT APPLICATION

(11) **EP 4 787 661 A1**
(43) Date of publication of application: **05.08.2026**
(21) Application number: 26155603.9
(22) Date of filing: 31.01.2026
(51) Int. Cl.: H02J 4/20, H02J 13/10, H02J 13/13

(54) **WIRED COMMUNICATION, SYSTEM FOR GENERATING AND CONVERTING ELECTRICAL ENERGY AND METHOD FOR GENERATING AND CONVERTING ELECTRICAL ENERGY**

(30) Priority: 03.02.2025 PL 45113525
(71) Applicant: CORAB Technology Spolka z ograniczona odpowiedzialnoscia, 10-417 Olsztyn (PL)
(72) Inventor: Michniowski, Janusz, 34-360 Milowka (PL)
(74) Representative: Hudy, Ludwik

(57) **Abstract**

In wired communication for transmitting communication signals controlling the operation of an electric energy generating and converting system (101) of electric devices (111, 112) and transmitting between a processor (155) comprising ROM and RAM memory, a controller (150) of a microinverter of the electric energy generating and converting system (101) of the electrical devices that generate direct current electric energy, and a communication controller (180), branches of electric circuits being a communication transmitting branch (275) of the communication controller (180) and a control receiving branch (260) of the microinverter controller, which together with an electric neutral wire (N) and a bidirectional communication electric wire (CTL) form a communication line transmitting a communication signal TX from a transmitting pin (MTX) of the communication microcontroller to a receiving pin (RX) of the processor (155) of the controller (150) of the microinverter (120), and a control transmitting branch (360) of the controller (150) and a communication receiving branch (285) of the communication controller, which together with the electric neutral wire (N) and the bidirectional communication electric wire (CTL) form a communication line transmitting a communication signal TX from a transmitting pin (TX) of the microinverter processor to a receiving pin (MRX) of the communication controller (180).

## Description

The invention relates to a wired communication according to the preamble of claim 1. The subject of the invention is also an electric energy generating and converting system according to the preamble of claim 3, in particular with the wired communication, comprising a microinverter converting electric energy generated by electric devices and comprising converters, each of which is connected to the electric device, assigned to it, an alternating current generating module having a positive terminal and a negative terminal, wherein positive output terminals of each of the DC/DC converters are connected together and are connected to the positive input terminal of the alternating current generating module, and negative output terminals of each of the DC/DC converters are connected together and are connected to the negative input terminal of the alternating current generating module and a power supply module and a controller of a microinverter, that is coupled to the alternating current generating module and the power supply module.

Furthermore, the invention relates to a method for generating and converting electric energy according to the preamble of claim 11, in particular the converting electric energy by means of the electric energy generating and converting system with the wired communication.

Most known photovoltaic systems are equipped with microinverters with radio communication modules installed near the microinverters and a control module installed at the user's facility, which allows to read parameters of the microinverters and to convert electric energy generated by electric devices, comprising photovoltaic panels. Due to interference, data exchange between the microinverters and the control module through radio communication is non-continuous and subject to dataflow decline.

Publication US 2014265584 A1 of an application description of an invention titled "Online Surveillance System to Protect Solar Power Plants" presents a 4-channel, grid-interactive microinverter which converts direct current electric energy generated by four solar panels into alternating current electric energy. The microinverter communicates with a communication gate or a power line server to report a status of electric energy conversion in real time.

The invention described above uses data transmission through N and L1 wires, i.e. a neutral wire and an L1 phase wire. Such a solution requires transmission over the L1 phase wire while transmitting low voltage electric energy at an defined frequency, for example 125 kHz. Transmission is performed through a system which is expensive and complicated and does not guarantee one hundred per cent reliable operation. This solution is sensitive to interferences on the L1 line and does not guarantee interruption of electric energy conversion in case of an emergency.

Publication EP 3657652 A1 of an application description of an invention titled "Photovoltaic module" presents a photovoltaic module which includes multiple solar cells, a transducer for converting the direct current input power from the solar cell module, an inverter for converting direct current power to alternating current power, and a controller for controlling the inverter, wherein the controller provides asynchronous control of impulse width modulation for the inverter and controls a switching frequency of at least some of switching elements in the inverter to be varied over a period including a maximum point or a minimum point of the alternating current output power from the inverter.

The aim of the invention is to create wired communication comprising a minimum possible number of elements, which is to transfer into increased reliability of data transmission and a reduction in the amount of work and costs of production and assembly, while ensuring that the system interrupts generating and converting of an electric energy generated by electric device.

The aim of the invention is also to create a system with wired communication and a method for generating and converting electric energy which, in the event of a hazard, would prevent generating of voltage at a value that poses a threat to human life.

The idea of the invention is a wired communication being a unit of an electric energy generating and converting system, the electric energy produced or generated by electric devices, the system comprising
the electric devices,
a microinverter converting the electric energy generated by the electric devices and comprising
   DC/DC converters, each of which is connected to the electric device, assigned to it,
   an alternating current generating module that generates electric energy with parameters corresponding to parameters of a power grid from direct current electric energy and has a positive input terminal and a negative input terminal, wherein positive output terminals of each of the DC/DC converters are connected together and are connected to a positive input terminal of the alternating current generating module, and negative output terminals of each of the DC/DC converters are connected together and are connected to a negative input terminal of the alternating current generating module,
   a power supply module, and
   a controller of a microinverter, that is coupled to the alternating current generating module and the power supply module,
wherein the wired communication is used for transmitting communication signals controlling operation of the electric energy generating and converting system, the electric energy generated by the electric devices, and transmitted between a processor comprising ROM and RAM memory of the controller of the microinverter of the electric energy generating and converting system, the electric energy generated by the electric devices which generate direct current electric energy, and a communication controller, wherein the wired communication comprises a communication microcontroller being a communication processor comprising a communication controller the ROM and RAM memory, electric and electronic units and electrical wires forming branches of electric circuits and connecting the electric and electronic units to pins or connectors of the communication processor of the communication controller and to pins or connectors of the processor of the microinverter controller, and the power supply module for powering the microinverter controller and a power supply for powering the communication controller,
characterized in that the branches of electric circuits are
a communication transmitting branch of the communication controller and a control receiving branch of the microinverter controller, which together with an electric neutral wire and a bidirectional communication electric wire form a communication line transmitting a communication signal TX from a transmitting pin of the communication microcontroller to a receiving pin of the processor of the controller of the microinverter,
a control transmitting branch of the controller of the microinverter and a communication receiving branch of the communication controller, which together with the electric neutral wire and the bidirectional communication electric wire form a communication line transmitting a communication signal TX from a transmitting pin of the communication microcontroller to a receiving pin of the communication controller,
wherein the electric and electronic units belonging to the electric circuit branches are a keying system belonging to the communication transmitting branch of the communication controller and comprising a PWM modulator which receives a signal from the communication microcontroller and which is powered or supplied from an AC/DC power supply, referred to as a communication microcontroller power supply, with the direct current having a voltage of value from 5,0 V to 50,0 V, which is keyed by the keying system and is transmitted as a PWM signal from the communication microcontroller to the processor of the controller of the microinverter,
a resistor belonging to the communication receiving branch of the communication controller, on which voltage is built-up and caused by the current flow through the resistor caused by the control signal sent by the processor of the controller of the microinverter, and which is transmitted to a receiving pin of the processor of the communication controller having the ROM and RAM memory,
a resistor belonging to the control receiving branch of the controller of the microinverter from which a communicating signal is sent via a resistor to a receiving pin of the processor of the controller of the microinverter receiving the RX signal and from which the PWM signal is transmitted in the communication electric wire with bidirectional communication via the communication controller,
a set of amplifying transistor systems belonging to the control transmitting branch mplifying the TX communication signal received from a transmitting pin of the microinverter controller and transmitted via the bidirectional communication line to a communication controller.

Preferably, an electric energy converting blocking device is provided in the communication electric wire.

The idea of the invention is as well an electric energy generating and converting system comprising
electric devices,
a microinverter converting electric energy generated by the electric devices and comprising
   DC/DC converters, each of which is connected to the electric device, assigned to it,
   an alternating current generating module that generates electric energy with parameters corresponding to parameters of a power grid from direct current electric energy and has a positive input terminal and a negative input terminal, wherein positive output terminals of each of the DC/DC converters are connected together and are connected to the positive input terminal of the alternating current generating module, and negative output terminals of each of the DC/DC converters are connected together and are connected to the negative input terminal of the alternating current generating module,
   a power supply module, and
   a controller of a microinverter, that is coupled to the alternating current generating module and the power supply module,
a communication controller with an interface enabling communication with a user,
a wired communication for transmitting communication signals controlling the operation of the electric devices of the electric energy generating and converting system, the communication signals transmitted between a microinverter controller processor of the electric energy generating and converting system, the electric energy generated by the electric devices which generate direct current electric energy, and a communication controller, wherein the wired communication comprises a communication microcontroller being a communication processor of the communication controller, electric and electronic units and electrical wires forming branches of electric circuits and connecting the electric and electronic units to pins or connectors of the communication processor of the communication controller and to pins or connectors of the processor of the microinverter controller, and a direct current power supply system of the communication controller, characterized in that the branches of electric circuits are
a communication transmitting branch of the communication controller and a control receiving branch of the microinverter controller, which together with an electric neutral wire and a bidirectional communication electric wire form a communication line transmitting a communication signal TX from a transmitting pin of the communication microcontroller to a receiving pin of the processor of the controller of the microinverter,
a control transmitting branch of the controller of the microinverter and a communication receiving branch of the communication controller, which together with the electric neutral wire and the bidirectional communication electric wire form a communication line transmitting a communication signal TX from a transmitting pin of the communication microcontroller to a receiving pin of the communication controller,
wherein the electric and electronic units belonging to the electric circuit branches are a keying system belonging to the communication transmitting branch of the communication controller and comprising a PWM modulator which receives a signal from the communication microcontroller and which is powered or supplied from an AC/DC power supply referred to as a communication microcontroller power supply with the direct current having a voltage of value from 5,0 V to 50,0 V, which is keyed by the keying system and is transmitted as a PWM signal from the communication microcontroller to the processor of the controller of the microinverter,
a resistor belonging to the communication receiving branch of the communication controller, on which voltage is built-up and caused by the current flow through the resistor caused by the control signal sent by the processor of the controller of the, and which is transmitted to a receiving pin of the processor of the communication controller having the ROM and RAM memory,
a resistor belonging to the control receiving branch of the controller of the microinverter from which a communicating signal is sent via a resistor to a receiving pin of the processor of the controller of the microinverter receiving the RX signal and from which the PWM signal is transmitted in the communication electric wire with bidirectional communication via the communication controller,
a set of amplifying transistor systems belonging to the control transmitting branch amplifying the TX communication signal received from a transmitting pin of the microinverter controller and transmitted via the bidirectional communication line to a communication controller.

In a preferred embodiment the control receiving branch comprises the resistor through which a PWM digital electric signal is transmitted in a communication line from the communication microcontroller and which is connected at one end to a photoemitter of an optocoupler, preferably an LED diode, and at another end is connected to the neutral communication line, wherein a photodetector of the optocoupler, preferably a phototransistor, is connected at one end to the terminal - UK and at another end is connected through the resistor to the pin of the processor of the controller of the microinverter receiving the RX signal.

Preferably, the control transmitting branch comprises a set of amplifying transistor circuits which amplifies the signal fed to the photoemitter, preferably an LED diode, an optocoupler and generated in the photodetector, preferably a phototransistor, of the optocoupler, wherein one end of the photodetector of the optocoupler is connected to the communication line and another end of the photodetector of the optocoupler is connected to one end of a resistor limiting a gate current of an amplifying transistor, to which it is connected by its remaining end, and a gate of the amplifying transistor is connected via a resistor to a source of the amplifying transistor, which is connected to the neutral wire, while a drain of the amplifying transistor is connected via a resistor to the end of the resistor at the point where the control receiving branch and the control transmitting branch connect to each other and become the communication line through which the PWM electric signal is received from the communication controller, and the photoemitter, preferably the LED, of the optocoupler is connected at one end to a positive terminal +UK of the direct current source via an impedance coil and a resistor limiting a rising current of a digital signal and, and at the other end is connected to a drain of a transistor, preferably an n-type field effect transistor or an npn silicon transistor, and a gate of the transistor is connected via a resistor to the TX signal transmitting pin of the microinverter controller processor and to one end of a resistor, which acts as a blocking element for the operation of the transistor, and another end of the resistor is connected to a source and gate of the field effect transistor and to a -UK terminal of the direct current source to which via a capacitor a junction point of the resistor and the impedance coil is connected.

In a preferred embodiment, the transmitting branch of the communication controller comprises the AC/DC power supply having an input and generating an output of a DC voltage of value from 5,0 V to 50,0 V, to terminals of which a capacitor is connected, which filters noise from the power supply reducing the fluctuation of the voltage waveform at the output of the AC/DC power supply, wherein a positive output terminal with a voltage of value from 5,0 V to 50,0 V, preferably 10,0 V, of the power supply is connected to an emitter of a keying transistor which keys the PWM signal, and to one end of a resistor which blocks a work of the keying transistor, causing the transistor to be switched off when the optocoupler is not switched on causing the conduction of the transistor to be switched off when the optocoupler is not switched on, and another end of the resistor is connected to a base of the keying transistor, which is connected via a resistor to one end of the photodetector of the optocoupler, wherein the optocoupler is switched on by applying the TX signal having the voltage of value from 3,0 V to 6,0 V, preferably 3,3 V, from the communication microcontroller of the communication controller, which causes switching on the keying transistor into the conduction state and applying the voltage of value from 5,0 V to 50,0 V, preferably 10,0 V, from the communication microcontroller of the communication controller of the microinverter to the CTL line according to the PWM modulation of the TX signal.

Preferably, the communication receiving branch comprises the resistor, on which the voltage is built-on in the case of loading the communication line with the PWM signal loading the line with respect to the neutral wire, causes switch on the photoemitter, preferably the LED diode, of the optocoupler, and the PWM signal with a voltage of value from 3,0 V to 6,0 V, preferably 3,3 V, caused by the voltage drop on the resistor, to be transmitted from the resistor to the communication microcontroller of the communication controller via the RX line connected to one of the ends of the photodetector, preferably the phototransistor, of the optocoupler, wherein the photoemitter, preferably the LED diode, of the optocoupler is connected with one end to the communication line and with another end to a collector of the transistor, and that the communication receiving branch further comprises wires connected to ends of the photoemitter, preferably the LED diode, of the optocoupler.

Additionally, in the electric communication wire there can be a blocking device which blocks an electric energy converting.

Furthermore, the idea of the invention is a method for generating and converting electric energy, the electric energy generated and converted by means of an electric energy generating and converting system that comprises
electric devices,
a microinverter converting the electric energy generated by the electric devices and comprising
   converters, each of which is connected to the electric device, assigned to it, DC/DC converters, each of which is connected to the electric device, assigned to it,
   an alternating current generating module that generates electric energy with parameters corresponding to parameters of a power grid from direct current electric energy and has a positive input terminal and a negative input terminal, wherein positive output terminals of each of the DC/DC converters are connected together and are connected to the positive input terminal of the alternating current generating module, and negative output terminals of each of the DC/DC converters are connected together and are connected to the negative input terminal of the alternating current generating module,
   a power supply module, and
   a controller of a microinverter, that is coupled to the alternating current generating module and the power supply module,
a communication controller with an interface enabling communication with a user,
a wired communication for transmitting communication signals controlling the operation of the electric energy generating and converting system, the electric energy generating by the electric devices, and transmitted between a communication controller and a microinverter controller processor of the electric energy generating and converting system, the electric energy generating by the electric devices that generate direct current electric energy, wherein the wired communication comprises a communication microcontroller being a communication processor of the communication controller,
electric and electronic units and electrical wires forming branches of electric circuits and connecting the electric and electronic units to pins or connectors of the communication processor of the communication controller and to pins or connectors of the processor of the microinverter controller and a direct current power supply system of the communication controller, characterized in that
switching on power supplies,
sending a keyed signal to a processor by a communication microcontroller and keyed by the voltage keying system keyed from the direct current voltage of the power supply, wherein the keyed signal comprises generated data transmission packets according to a protocol stored in ROM memory of the processor or the communication microcontroller, via a communication line in order to control the DC/DC converters converting the energy generating by the photovoltaic panels and to control the alternating current generating module,
receiving the keyed signal by the processor of the controller of the microinverter and identifying by the processor the keyed signal defined according to the protocol stored in the ROM memory and recognized on the basis of data stored in the memory of the processor of the controller of the microinverter,
sending a control signal by the processor of the controller of the microinverter or microinverters to the DC/DC converters converting the energy generated by the photovoltaic panels,
receiving the control signal sent by the processor by the DC/DC converters converting the energy generated by the photovoltaic panels,
recognizing the control signal by the DC/DC converter to which the control signal was intended,
a cyclical optimization of converting the electric energy by the DC/DC converter to which the control signal was intended, converting the energy generated by the photovoltaic panel connected to the DC/DC converter converting the electrical energy, to which the control signal was intended and sending a feedback signal to the processor of the controller of the microinverter through the DC/DC converter which recognized the control signal intended to it, about the state of the converting of the electric energy by the DC/DC converter to which the control signal was intended, wherein the feedback signal comprises information about the operating state of the photovoltaic panel to which the DC/DC converter is connected,
in the case when the photovoltaic panel, connected to the DC/DC converter, to which the control signal was sent, is working correctly, sending cyclically to the processor or the microcontroller of the communication controller the keyed signal defined according to the protocol stored in the ROM memory of the processor of the controller of the microinverter and comprising generated data transmission packets comprising information on the operating state of the photovoltaic panel, to which the DC/DC converter for converting energy is connected,
repeating the steps until the operating state of all photovoltaic panels has been determined and all DC/DC converters for converting the energy generated by the photovoltaic panels and connected thereto receive keyed signals to continue converting the energy or to stop converting the energy,
converting of the electricity generated by the photovoltaic panels into alternating current electric energy by the alternating current generating module,
cyclical checking of the electric energy generating and converting system by the processor of the controller of the microinverter,
switching off the converting of electric energy generated by the photovoltaic panels in the event of a lack of communication between the processor or the communication microcontroller and the processor of the controller of the microinverter or in the event of a command issued by the communication controller to switch off the generating of electric energy by the microinverter or in the event of a lack of voltage supplied by the power supplies.

In a preferred embodiment of the idea of the invention is method for controlling an electric energy generating and converting system by means of signals transmitted via wires and/or radio signals, wherein electric devices are photovoltaic panels, whereas electric energy converting systems and control systems for controlling the electric devices that are connected to the electric devices via electric wires and that transmit and/or receive electric signals via wired and/or radio communication are devices comprised in a microinverter comprising
DC/DC converters for converting energy from the photovoltaic panels, each of the DC/DC converters for converting energy is assigned to one photovoltaic panel,
an alternating current generating module which generates electric energy with parameters corresponding to parameters of a power grid and which is connected to DC/DC converters that convert electric energy generated by photovoltaic panels,
a power supply module,
a microinverter controller comprising a processor with ROM and RAM memory and communicating with the DC/DC converters that convert electric energy generated by the photovoltaic panels, and with the alternating current generating module which generates electric energy having parameters corresponding to parameters of a power grid,

wherein the control systems are furthermore a communication controller comprising
   a communication microcontroller,
   AC/DC power supply or DC power supply and
   a voltage keying system,
whereas the wired communication comprises
   a communication wire CTL,
   a neutral wire N and
   opto-isolators,
the method characterized in that it comprises the following steps:
   switching on power supplies,
   sending a keyed signal to the processor by the communication microcontroller, keyed by the voltage keying system that keys a direct current voltage of the power supply, wherein the keyed signal comprises generated transmission frames or transmission packets according to a protocol stored in the ROM of the communication microcontroller, via the communication line in order to control the DC/DC converters converting the energy generated by the photovoltaic panels, that are used for controlling the alternating current generating module,
   receiving the keyed signal by the processor of the controller of the microinverter and identifying by the processor the keyed signal defined according to the protocol stored in the ROM memory and recognized on the basis of data stored in the memory of the processor of the controller of the microinverter,
   sending a control signal by the processor of the microinverter controller or microinverters to the DC/DC converters converting the energy generated by the photovoltaic panels, receiving the control signal sent by the processor by the DC/DC converters converting the energy generated by the photovoltaic panels,
   recognizing the control signal by the DC/DC converter to which the control signal was intended,
   a cyclical optimization of converting the electric energy by the DC/DC converter to which the control signal was intended and converting the electric energy generated by the photovoltaic panel connected to the DC/DC converter converting the electric energy to which the control signal was intended and sending a feedback signal to the processor of the controller of the microinverter through the DC/DC converter which recognized the control signal intended for it, about the state of the converting of the electric energy by the DC/DC converter to which the control signal was intended, wherein the feedback signal comprises information about the operating state of the photovoltaic panel to which the DC/DC converter is connected,
   in case when the photovoltaic panel connected to the DC/DC converter, to which the control signal was sent, operates correctly, cyclically sending to the microcontroller of the communication controller the keyed signal defined according to the protocol stored in the ROM memory of the processor of the controller of the microinverter and comprising generated transmission packets comprising information on the operating state of the photovoltaic panel to which the DC/DC converter converting the energy is connected,
   repeating the steps until the operating state of all photovoltaic panels is determined and all DC/DC converters converting the electric energy generated by the photovoltaic panels and connected thereto will receive keyed signals to continue converting the electric energy or to stop converting the electric energy,
   converting the electric energy generated by the photovoltaic panels into alternating current electric energy by the alternating current generating module,
   a cyclical checking of the operation of the electric energy generating and converting system by the processor of the controller of the microinverter,
   switching off the converting the electric energy generated by the photovoltaic panels in the event of a lack of communication between the communication microcontroller and the processor of the controller of the microinverter or in the event of a command issued by the communication controller to switch off the generation of electric energy by the microinverter or in the event of a lack of voltage supplied by the power supplies.

Whereas, the lack of communication between the processor or the communication microcontroller and the processor of the controller of the microinverter can be caused by means of a electric energy converting blocking device.

Preferably, the electrical devices are batteries or direct current electric energy dynamos or generators.

The idea of the invention is also software of processors or a processor and a communication microcontroller stored on a medium or media usable by the processors or the processor and the communication microcontroller, comprising the software readable by the processors or the processor and the communication microcontroller, which, when executed, causes the processors or the processor and the communication microcontroller performs/perform all the steps of the method described above.

A significant advantage of the described wired communication is the simplicity of the wireless solution, the galvanic isolation, the low manufacturing cost of the microinverter and the communication controller, and the very high reliability of the device blocking the operation of the electric energy generating and converting system with the wired communication, guaranteeing the interruption of the electric energy generating by the microinverters if the electric energy converting blocking device is activated. Furthermore, thanks to the fact that the communication controller additionally has WiFi, ETHERNET, Bluetooth communication, which allows the user to communicate with the entire set comprising the microinverter or multiple microinverters and change the operating parameters as well as read the operating parameters of the electric energy generating and converting system with the wired communication.

The invention is illustrated in attached drawings, in which:
Fig. 1 shows a block diagram of one of embodiments of an electric energy generating and converting system according to the invention,
Fig. 2 shows a block diagram of another of embodiments of the electric energy generating and converting system according to the invention,
Fig. 3 shows a schematic diagram of one of embodiments of a microinverter controller and a communication controller of wired communication according to the invention,
Fig. 4 shows schematically a processor of the microinverter controller,
Fig. 5 shows signal waveforms,
Fig. 6 shows a set of DC/DC converters,
Fig. 7 shows a circuit diagram of one of embodiments of an entrance unit of an AC generating module of the electric energy generating and converting system according to the invention, and
Fig. 8 shows a schematic diagram of one of embodiments of an end unit of the AC generating module of the system of electric energy generating and converting according to the invention, and
Figs 9A, 9B, 9C and 9D show a block diagram of a method for generating and converting electric energy.

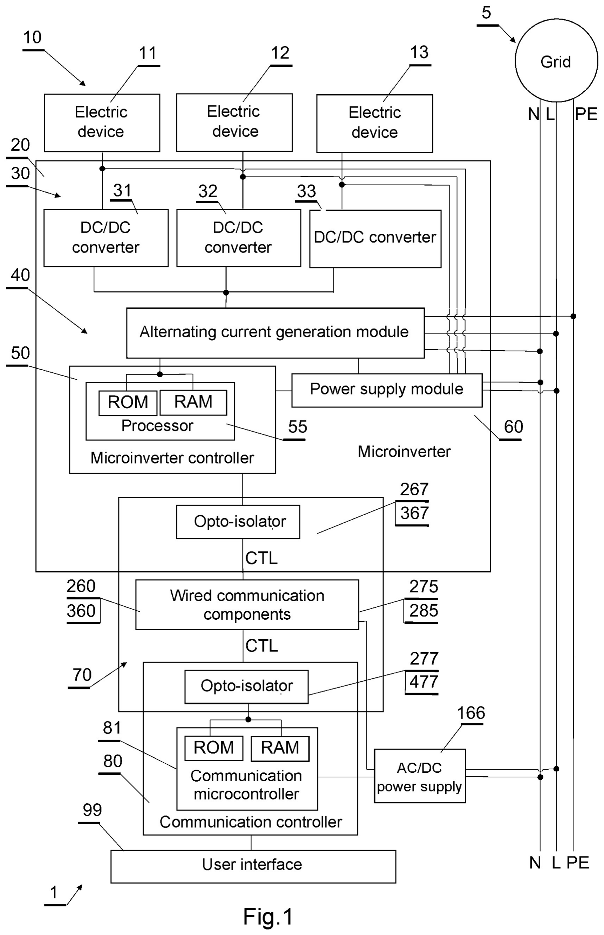

Fig. 1 shows a block diagram of one of embodiments of an electric energy generating and converting system 1 that is connected to a grid 5 with a protective earth conductor PE. The electric energy generating and converting system 1 comprises a set 10 of electric devices of which three electric devices 11, 12, 13 are shown in Fig. 1, that produce or generate electric energy that is converted from direct current energy to alternating current energy with parameters, in one embodiment, corresponding to the parameters of the power grid that supplies electric energy to individual consumers at a frequency of 50 Hz, using a microinverter 20, which is a device that converts electric energy. The electric devices 11, 12, 13, that depending on the embodiment, can be numerous, for example four or more, and which are devices selected from photovoltaic panels, batteries, for example accumulators, direct current generators or dynamos and power generating devices, or combinations thereof.

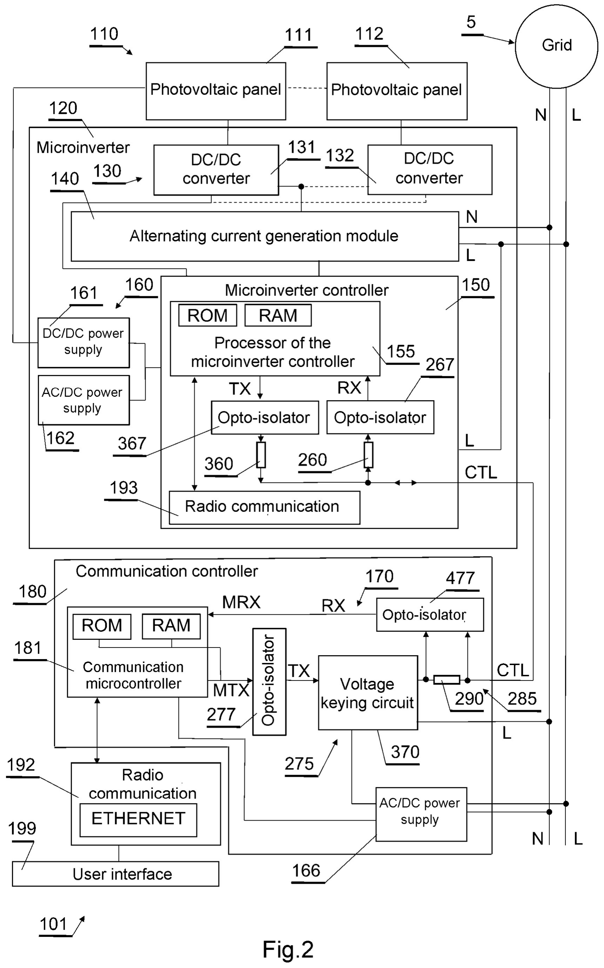

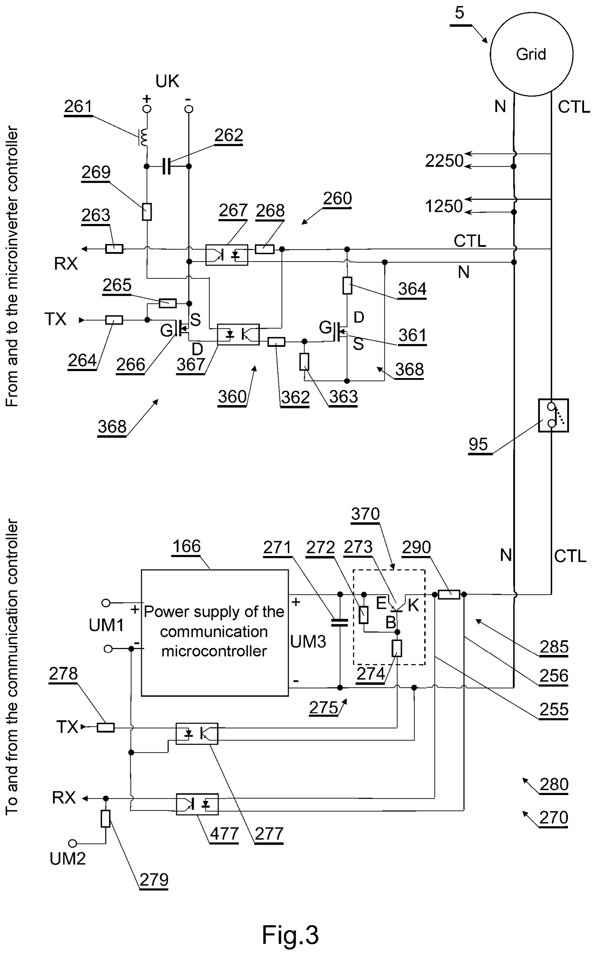

A microinverter 20 in the embodiment shown in Fig. 1 comprises a set 30 of DC/DC converters, for example converters 31, 32, 33, of which depending on the embodiment there can be a lot, for example four or more, each of which is connected to the electric device 11, 12, 13, respectively, assigned to it, and a power energy module or an alternating current generating module 40. A voltage value at terminals of the DC/DC converters 31, 32, 33 is selected from a range from 60,0 V to 100,0 V. In particular, in one embodiment, the voltage value at the terminals of the DC/DC converters 31, 32, 33 is 60,0 V, in another embodiment 100,0 V, and in yet another embodiment it is preferably 75,0 V. Positive output terminals of each of the DC/DC converters 31, 32, 33 are connected together and are connected to a positive input terminal of the alternating current or converting direct current to alternating current generating module 40. Negative output terminals of each of the DC/DC converters 31, 32, 33 are connected together and are connected to a negative input terminal of the alternating current generating module 40. Furthermore, the electric energy generating and converting system 1 in one embodiment comprises a power supply module 60 and a microinverter controller 50 that is coupled to the alternating current generating module 40 and the power supply module 60, a communication controller 80 with a communication processor 81, a wired communication 70 comprising a CTL communication line, a neutral wire N, optionally opto-isolators 267 and 367, 277 and 477, and wired communication units that are embedded in branches 275, 285, 260, 360 and that, via the CTL communication line, the neutral wire N, and optionally opto-isolators 267 and 367, 277 and 477, enable communication between the microinverter controller 50 and the communication controller 80. The communication transmitting branch 275 of communication controller comprises a power supply 166. The microinverter controller 50 comprises a computing unit, for example a processor 55 with ROM and RAM, and communicates with a set 30 of converters 31, 32, 33, the alternating current generating module 40 with parameters, in one embodiment, corresponding to parameters of the power grid that supplies electric energy with parameters corresponding to those of the power grid to individual consumers and the communication controller 80 for transmitting and receiving data to and from the microinverter controller 50 via the bidirectional CTL communication line transmitting a signal after being keyed by a keying system 370 shown schematically in Fig. 2 and Fig. 3. In one of embodiments, the communication controller 80 communicates with a user via interface 99. By "keying" is meant, in the case of the present invention, a switching on and off of each of the above and below mentioned keying transistors, which will generate a data packet in a form of series of pulses of different widths, wherein the pulses of the order of 0.1 ms duration will be treated as a logical state "0" and pulses of the order of 0.5 ms duration will be treated as a logical state "1", thus the series of pulses will be series of numbers written in the form of binary numbers with the digits "0" and "1", which will be used to encode PWM digital signals for transmitting and receiving data to and from microinverter controllers via a bidirectional CTL communication line and a neutral wire N, thus enabling communication between the microinverter controllers and the communication controllers described with reference to all figures.

Fig. 2 shows a block diagram of another of embodiments of an electric energy generating and converting system 101 in which the electric devices are photovoltaic panels, of which only two photovoltaic panels 111, 112 are shown in Fig. 2. The system 101 comprises a set 110 of photovoltaic panels 111, 112 that produce or generate direct current energy, which is converted from the direct current energy to alternating current energy with parameters, in one embodiment, corresponding to the parameters of the power grid, which supplies electric energy to individual consumers with parameters corresponding to the parameters of the power grid, by means of a microinverter 120. The microinverter 120 comprises a set 130 of DC/DC converters, of which two DC/DC converters 131, 132 are shown in Fig. 2, each of which is connected to an associated photovoltaic panel, respectively 111, 112. Positive output terminals of each of the DC/DC converters 131, 132, of which depending on the embodiment there may be more than two, are connected to each other and are connected to a positive input terminal of an alternating current generating module 140. Negative output terminals of each of the DC/DC converters 131, 132 are connected together and are connected to a negative input terminal of the alternating current generating module 140. Furthermore, the electric energy generating and converting system 101 comprises a power supply module 160 comprising, among other units, a DC/DC power supply 161 and an AC/DC power supply 162, the alternating current generating module 140, a microinverter controller 150 which is an electric power conversion control device and which communicates with the alternating current generating module 140 and the power supply module 160, a communication controller 180 with a communication processor 181 which is a communication microcontroller, and a wired communication 170 comprising the opto-isolated CTL communication line and a neutral wire N, through which the microinverter controller 150 communicates with the communication controller 180 via the CTL communication line and the neutral wire N. The microinverter controller 150 comprises a computing unit, for example a processor 155 with ROM and RAM, and communicates with the set of DC/DC converters 130, of which two DC/DC converters 131, 132 are shown in Fig. 2, the alternating current generating module 140 with parameters, in one embodiment, corresponding to the parameters of the power grid, and the communication controller 180 for transmitting and receiving data from the microinverter controller 150 via the bidirectional communication line CTL transmitting a signal after being keyed by the keying system 370 or being keyed by means of the voltage keying circuit 370, shown in more detail in Fig. 3. The electric energy generating and converting system 101 in one embodiment comprises a radio communication 192, 193, for example, WiFi, Bluetooth, ETHERNET, via which the microinverter controller 150 communicates alternatively or jointly via the wired communication 170 with the communication controller 180. In one embodiment, the communication controller 180 has the ability to communicate with a user via interface 199.

The wired communication 170 in one of embodiments, in the part belonging to the controller 150 of the microinverter 120, comprises a control receiving branch 260 and a control transmitting branch 360, each with the opto-isolator 267, 367, respectively, for example with an optocoupler. Similarly, the wired communication 170 of the communication controller 180 comprises the communication transmitting branch 275 and the communication receiving branch 285, each with the opto-isolator 277, 477, respectively, for example with the optocoupler.

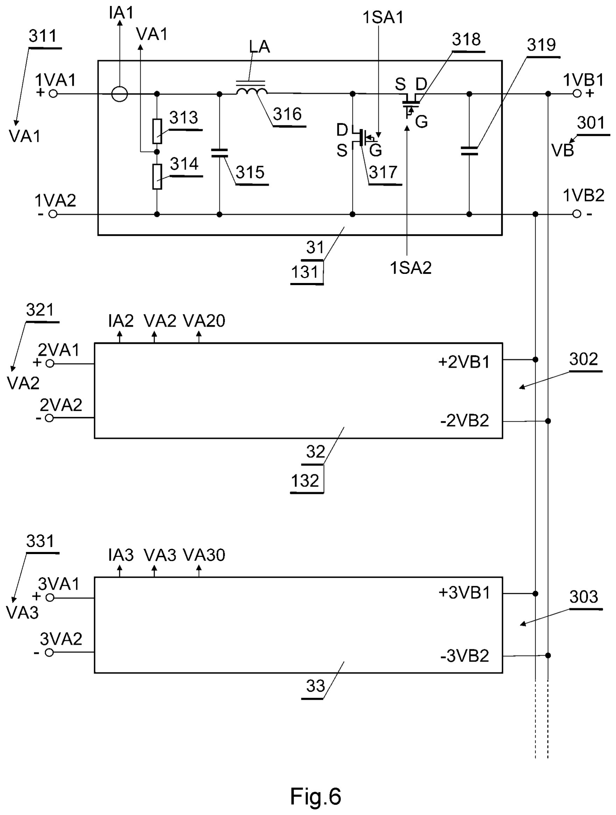

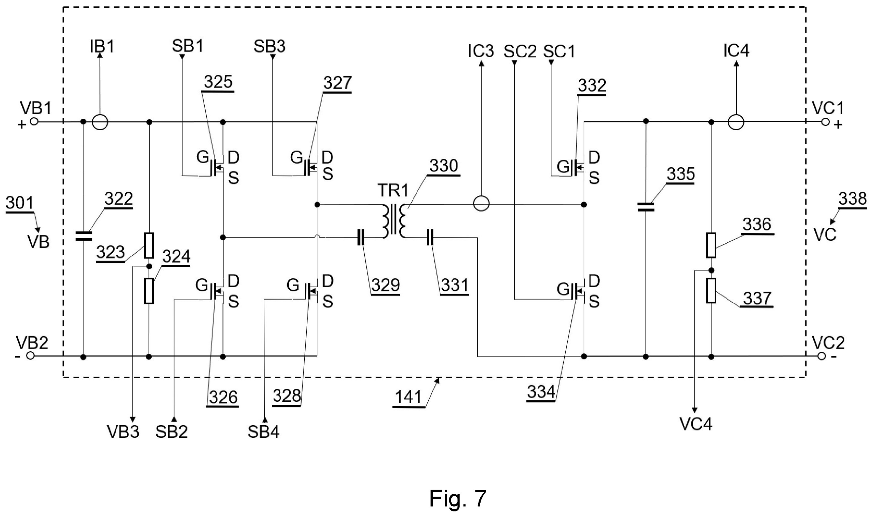

The microinverter 20, 120 of the electric energy generating and converting system 1, 101 with the wired communication is a device that converts electric energy generating or producing by each electrical device 11, 12, 13 or photovoltaic panel 111, 112 and processed separately by separate DC/DC converters 31, 32, 33, 131, 132 assigned to one selected electrical device 11, 12, 13 or photovoltaic panel 111, 112. Separate converters supply a direct current voltage of up to 60,0 V to 100,0 V, preferably 75,0 V, to an output 301 of a system shown in Fig. 6, which is stabilised. The direct current voltage of value from 60,0 V to 100,0 V is converted by transistor keys in GaN technology shown in Fig. 7, keying by a high frequency, for example 250 kHz, with a pulse transformer 330 shown in Fig. 7, which, through the winding transmission, generates an alternating voltage AC from 300,0 V to 500,0 V, preferably 400,0 V. The alternating voltage AC of value from 300,0 V to 500,0 V, preferably 400,0 V, from the pulse transformer 330 is rectified by high-efficiency GaN transistor keys and smoothed by a set of capacitors to the direct current voltage of value from 300,0 V to 500,0 V, preferably 400,0 V. In this case the keying is performed by the transistor keys of microcontroller 20, 120 that adapt the signal of the microcontroller 20, 120 to the keying signals of the GaN power transistors. This solution allows for the lowest possible losses when converting an alternating current voltage of value from 300,0 V to 500,0 V, preferably 400,0 V, into a direct current voltage of value from 300,0 V to 500,0 V, preferably 400,0 V. The direct current voltage of 300,0 V to 500,0 V, preferably 400,0 V, is converted by keying GaN power transistors with a frequency of, for example, 125 kHz into the alternating current voltage with parameters, in one embodiment, corresponding to the parameters of the power grid that supplies electricity to individual consumers, for example with a frequency of 50 Hz under a phase voltage of 230 V. A set of filtering coils and capacitors smooths a shape of sinusoid, or rather reduces fluctuation, after the keying process. The keying is performed using GaN power transistors and is implemented by the microcontroller using an algorithm that allows for obtaining the correct sine waveform at a frequency of 50 Hz.

The microinverter is operated using an application that allows for the configuration of the microinverter's operating parameters, the configuration of alarm states, the configuration of limit parameters for electricity generation, and the presentation of the microinverter's operating results. The above-described system 1, 101 has a safety system that allows the electric energy generating to be immediately shut down by activating an electric energy converting lockout or blocking device 95, which disconnects the CTL wire connection, which causes the microinverter processor 20, 120 to read this state and stop the converting of energy generated by the electric devices 11, 12, 13 or the photovoltaic panels 111, 112.

Fig. 3 shows a schematic diagram of one of embodiments of a wired communication 270 of the controller 150 of the microinverter 120 and the communication controller 180 shown in Fig. 2, by means of which both controllers communicate with each other and which are units of the system 1 of Fig. 1, comprising the electric devices 11, 12 being sources of electric energy, or the system 101 of Fig. 2, in which the electric devices are photovoltaic panels, of which two photovoltaic panels 111, 112 are shown in Fig. 2.

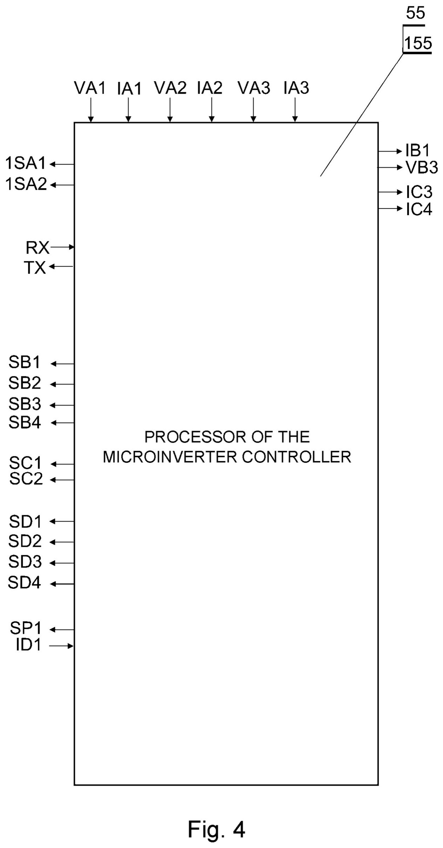

The communication microcontroller 181, which is the processor of the communication controller 180 shown in Fig. 2, using a digital PWM signal transmits TX data over a line comprising the optocoupler 277, which is a galvanic isolation system, to the keying system 370 of voltage of value from 5,0 V to 50,0 V in one embodiment, preferably 10,0 V in another embodiment, supplied from the AC/DC power supply 166. The PWM digital signal within the meaning of the present invention is a signal with a rectangular voltage waveform, the value of which varies between two levels, namely between a high level of 5,0 V or 50,0 V, preferably 10,0 V, or selected from the range from 5,0 V to 50,0 V, and a low level of 0,0 V, and PWM pulse width modulation is a method that allows indirect control of the power supplied to various devices via a communication protocol in which a narrow pulse corresponds to a logical zero and a wide pulse corresponds to a logical one by means of a signal that is switched between a high level, otherwise the on state, and a low level, otherwise the off state. In one embodiment, the protocol is a UART protocol. After sending a data packet, which consists of start/stop bits, data bits, command bits, and checksum bits, from the communication controller 181 via the CTL wire, the microinverter 120 receives the data via resistor 268 and optocoupler 267 and then processes it. The received digital signal, which is analysed, allows for the generating of alternating current energy with parameters corresponding to those of the power grid. In turn, the processor 155 of the microinverter 120 from a pin TX, shown in Fig. 4, transmits the digital PWM signal via the communication wire/line CTL with the optocoupler 367 and a resistor 364, which, after being sent to the communication controller 180, generates a digital signal on a resistor 290 transferred via the optocoupler 477 to the communication microcontroller 181.

Signal transmission between the communication microcontroller 181 and the processor 155 of the controller 150 of the microinverter 120, in one embodiment, is enabled by wired communication circuits, the branches of which are the communication transmitting branch 275 of the communication controller 180 and the control receiving branch 260 of the microinverter controller, which together with the bidirectional communication electric wire CTL form the communication line transmitting a communication signal TX from a transmitting pin MTX of the communication microcontroller to a receiving pin RX of the processor 155 of the controller 150 of the microinverter 120, and the control transmitting branch 360 of the controller 150 of the microinverter 120 and the communication receiving branch 285 of the communication controller, which together with the bidirectional communication electric wire CTL form a communication line transmitting the communication signal TX from the transmitting pin TX of the microinverter processor to the receiving pin MRX of the communication controller. In turn, the electric and electronic units of the communication controller are the keying system belonging to the communication transmitting branch 275 of the communication controller and comprising a PWM modulator, which receives a signal from the communication microcontroller and which is powered from the AC/DC power supply, referred to as the communication microcontroller power supply 166, with the direct current having a voltage of value from 5,0 V to 50,0 V, which is keyed by the keying system 370 and is transmitted as the PWM signal from the communication microcontroller to the processor 155 of the controller 150 of the microinverter 120, the resistor 290, belonging to the communication receiving branch 285 of the communication controller 180, on which voltage is built-on caused by a current flow through it and sent to the receiving pin of the processor 181 of the communication controller 180 having a ROM memory and a RAM memory, the current flow built-on the resistor 290 caused by a control signal sent by the processor 155 of the controller 150 of the microinverter 120, the resistor 268 belonging to the control receiving branch 260 of the controller 150 of the microinverter 120, and communicating via a resistor 263 with the receiving pin of the processor of the controller 150 of the microinverter 120 receiving the RX signal and transmitting the PWM signal transmitted in the communication electric wire CTL with bidirectional communication via the communication controller 180 and a set 368 of amplifying transistor systems 266, 361 belonging to the control transmitting branch 360 amplifying the TX communication signal received from the TX transmitting pin of the controller 150 of the microinverter 120 and transmitted via the bidirectional communication line CTL to the communication controller 280. The branches of electric circuits are described below with reference to Fig. 3.

From the communication line CTL or, in other words, from the communication electrical wire CTL and the neutral wire N, pairs of wires 1250, 2250 shown in Fig. 3 can be led out for connecting other microinverters.

The wired communication 270 of the controller 150 of the microinverter 120 and the communication of the controller 180 is carried out via the CTL wire and the neutral wire N of a network 5 of the alternating current power supply installation with parameters corresponding to the parameters of the power grid.

The wired communication 270 in the part pertaining to the microinverter controller 150 comprises the control receiving branch 260 and the control transmitting branch 360, each with the optocoupler 267, 367, respectively.

The control receiving branch 260 comprises the resistor 268, which is an element through which the PWM electric signal transmitted on the communication line CTL from the communication microcontroller 280 is transmitted, and which is connected at one end to a photoemitter, for example an LED, of the optocoupler 267, and at another end is connected to the neutral communication line N. A photodetector of the optocoupler, for example a phototransistor, is connected at one end to the terminal -UK and at another end is connected through the resistor 263 to the pin of the processor 155 of the controller 150 of the microinverter 120, shown in Fig. 2, receiving the RX signal.

The control transmitting branch 360 comprises a set 368 of amplifying transistor 266, 361 systems that amplifies the signal fed to the LED of the optocoupler 367 and generated in the photodetector of the optocoupler 367. One end of the photodetector of the optocoupler 367, for example the phototransistor, is connected to the communication line CTL, and another end of the photodetector, for example the phototransistor, of the optocoupler 367 is connected to one end of the resistor 362 limiting a gate G current of the amplifying transistor 361, to which it is connected by remaining end. The gate G of the amplifying transistor 361 is connected via a resistor 363 to a source S of the amplifying transistor 361, which is connected to the neutral wire N. The purpose of the resistor 363 is to block the switch on of amplifying transistor 361. A drain D of the amplifying transistor 361 via the resistor 364, as mentioned earlier, is connected to the end of the resistor 268 at the point where the control receiving branch 260 and the control transmitting branch 360 connect to each other and become the communication line CTL through which the PWM electric signal is received from the communication microcontroller 181 shown in Fig. 2. The photoemitter, for example the LED, of the optocoupler 367 is connected at one end to a positive terminal UK of the direct current source with a voltage of value from 3,0 V to 6,0 V, preferably 3,3 V, via the resistor 269 limiting the rising current of the digital signal, which reduces interference when switching highspeed digital signals, and an impedance coil 261, and at the other end is connected to the drain D of the transistor 266, for example an n-type field effect transistor or an npn silicon transistor. The gate G of the transistor 266 is connected via a resistor 264 to the TX signal transmitting pin of the microinverter controller processor and to one end of the resistor 265, which acts as a blocking element for the operation of the transistor 266. Another end of the resistor 265 is connected to the source S and the gate G of field effect transistor 266 and to the -UK terminal. The junction point of resistor 269 and the impedance coil 261 is connected by a wire to a negative -UK terminal of a 3,0 V to 6,0 V, preferably 3,3 V, DC source through a capacitor 262 that limits source noise.

The wired communication 270 in the part 280 belonging to the communication controller includes the communication transmitting branch 275 and the communication receiving branch 285, each with the optocoupler 277, 477, respectively.

The communication transmitting branch 275 of the communication controller comprises the AC/DC power supply 166 having an input UM1 and producing an output of the DC voltage of value from 5,0 V to 50,0 V, to the terminals of which a capacitor 271 is connected, which filters noise from the power supply 166, i.e. reduces the fluctuation of the voltage waveform. The positive output terminal UM3 with the voltage of value from 5,0 V to 50,0 V, preferably 10,0 V of the power supply 166 is connected to an emitter E of a keying transistor 273, which keying the PWM signal, and to one end of a resistor 272, which acts the role of blocking work of the keying transistor 273, causing the transistor 273 to be switched off when the optocoupler 277 is not switched on. The other end of resistor 272 is connected to a base B of the keying transistor 273, which is connected via resistor 274 to one end of the photodetector of the optocoupler 277. The optocoupler 277 is switched on by applying the TX signal having the voltage of value from 3,0 V to 6,0 V, preferably 3,3 V, from the communication microcontroller 81 of the communication controller 80, shown in Fig. 1, or the communication microcontroller 181 of the communication controller 180, shown in Fig. 2, which causes switching on the keying transistor 273 into the conduction state and applying the voltage of value from 5,0 V to 50,0 V, preferably 10,0 V, from the communication microcontroller 81 of the communication controller 80 of the microinverter 20, shown in Fig. 1, or the communication microcontroller 181 of the communication controller 180, shown in Fig. 2, to the CTL line according to the PWM modulation of the TX signal.

The communication receiving branch 285 comprises the resistor 290, which is a measuring element, the voltage build-on on which, in the case of loading the communication line CTL with the PWM signal loading the CTL line with respect to the neutral wire N, causes switch on the photoemitter of the optocoupler 477, for example an LED diode, and the PWM signal with a voltage UM2 of value from 3,0 V to 6,0 V, preferably 3,3 V, caused by the voltage drop across the resistor 290, to be transmitted from the resistor 279 to the communication microcontroller 181 of the communication controller 180, shown in Fig. 2, via the RX line connected to one of the ends of the photodetector, for example the phototransistor, of the optocoupler 477. The photoemitter, for example the LED diode, of the optocoupler 477 is connected with one end to the communication wire CTL and with the other end to a collector K of the transistor 273. The communication receiving branch 285 comprises, in addition to the resistor 290, wires 255, 256 connected to the ends of the photoemitter, for example the LED, of the optocoupler 477.

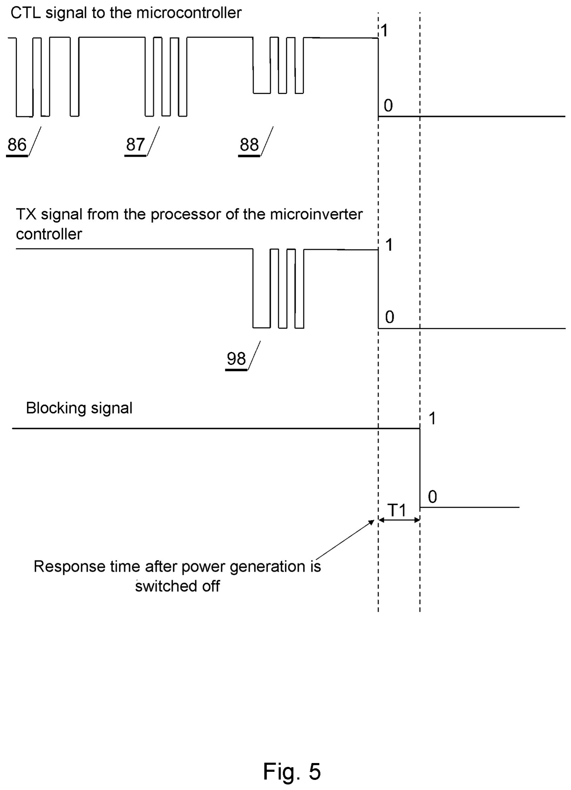

Briefly, in one embodiment, the communication controller or module 180, via the keying system 370, modulates the voltage in the range of 5,0 V to 50,0 V on the communication line CTL with the optocoupler 277. This signal is received by the processor 155 of the microinverter controller via the RX line with the optocoupler 267. The processor 155 of the microinverter controller responds with the TX signal via the controller 150 of the microinverter, the opto-isolator 367, and the resistor 364 loading the communication line CTL, which causes a packet of PWM pulses with reduced voltage 88 to be generated on the voltage waveform on the CTL line which causes a reduced voltage PWM pulse burst 88 to be generated on the voltage waveform on the CTL line, the waveform of which is shown in Fig. 5. The TX signal from the processor 155 of the microinverter loads the CTL communications line, and this load causes a voltage drop across the resistor 290 in the communication microcontroller 181, which transmits the signal to the communication microcontroller 181 via the opto-isolator 477.

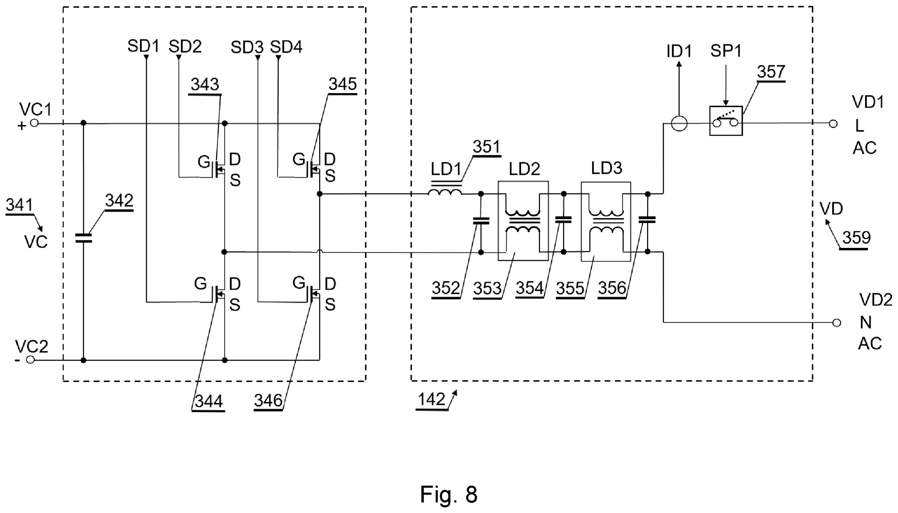

Fig. 4 schematically illustrates the processor 55 of the microinverter controller shown in Fig. 1 and the processor 155 shown in Fig. 2. In particular, in Fig. 4, pins VA1, IA1, VA2, IA2, VA3, IA3 are marked, to which signals are transmitted, marked in Fig. 6, with information about the operating state of the DC/DC converters 31, 32, 33 from Fig. 1 and 131, 132 from Fig. 2, as well as pins 1SA1 and 1SA2, from which signals controlling the operation of gallium nitride transistor 317 and 318 are transmitted, marked in Fig. 6. Furthermore, in Fig. 4, pins SB1, SB2, SB3, SB4, SC1, SC2 are designated, from which signals controlling the operation of the gallium nitride transistor 325, 326, 327, 328, indicated in Fig. 7, are transmitted, and pins IB1, VB3, IC3, IC4 are designated, to which signals, indicated in Fig. 7, are transmitted, with information on the operating state of a preliminary system 141 of the alternating current generating module 40 of the electric energy generating and converting system 1 shown in Fig. 1 and/or the alternating current generating module 140 of the electric energy generating and converting system 101 shown in Fig. 2. In Fig. 4, pins SD1, SD2, SD3, SD4 are also marked, from which signals controlling the operation of the gallium nitride transistor 343, 344, 345, 346, marked in Fig. 8, are transmitted, and a pin SP1, from which signals controlling the operation of a disconnector SP1 357 are transmitted, disconnecting the system 1, 101 from a phase line L, to which the alternating current voltage is applied to the network 5. Information about an interruption in the supply of alternating current power is transmitted to a pin ID1 after the circuit is broken by the disconnector SP1 357 shown in Fig. 8.

Fig. 5 shows the waveforms of the CTL signals transmitted to the microinverter and the TX signals from the processor of the microinverter controller. Thus, at the top, by indications 86, 87 are marked the PWM signals transmitted by the communication microcontroller 181 of the communication controller 180, the pulse width modulation protocol, and an indication 98 is assigned to the TX signal transmitted by the processor 155 of the microinverter 120 on the CTL line transmitted by the communication microcontroller 181. An indication 88 is assigned to the PWM signal received on the CTL line, a communication protocol. The low state 0 indicates that the microinverter 20, 120 has blocked the electric energy generating after the microinverter 20, 120 has had a delay time T1 to switch off the electric energy generating after the electric energy converting blocking device 95 has been activated, as shown at the bottom of Fig. 5.

Fig. 6 shows a schematic diagram of one of embodiments of the DC/DC converters 31, 32, 33 of the electric energy generating and converting system 1 of Fig. 1 comprising the electrical devices 11, 12, 13 being sources of the direct current electric energy, or a schematic diagram of the DC/DC converter 131 and the DC/DC converter 132 of the electric energy generating and converting system 101 of Fig. 2 comprising the photovoltaic panels 111, 112 being sources of the direct current electric energy. The number of the DC/DC converters 31, 32, 33 of the system 1 corresponds to the number of electric devices 11, 12, 13, and similarly the number of the DC/DC converters 131, 132 of the system 101 corresponds to the number of the photovoltaic panels 111, 112. In one of embodiments, each of the DC/DC converters 31, 32, 33, 131, 132 is the converter which increases an input voltage VA1 with a value from 5,0 V to 65,0 V of direct current at an input 311 or 321 or 331 to a higher output voltage VB with a value from 60,0 V to 100,0 V at an output 301 or 302 or 303 regardless of the input voltage VA1, VA2, VA3. The outputs of each of the DC/DC converters 31, 32, 33, 131, 132 in each system are connected together, so the output voltage of each of the DC/DC converters 31, 32, 33, 131, 132 must be the same. This converter comprises a voltage divider comprising two resistors 313, 314 connected in series, the free ends of which are connected to the terminals 1VA1, 1VA2 of the input 311. A positive terminal +1VA1 of the input 311 is additionally connected to one end of first capacitor 315, the other end of which is connected to a negative terminal -1VA2 of the input 311. Furthermore, the positive terminal +1VA1 of the input 311 is additionally connected to one end of coil LA of choke 316, the other end of which is connected to a source S of the gallium nitride transistor 318 and to a drain D of the gallium nitride transistor 317. A drain D of the gallium nitride transistor 318 is connected to a positive terminal +1VB1 of the output 301, and a source S of the gallium nitride transistor 317 is connected to a negative terminal - 1VB2 of the output 301, to which one end of second capacitor 319 is connected. The remaining end of the second capacitor 319 is connected to the negative terminal - 1VB2 of the output 301, which is an input 301 of the system shown in Fig. 7. As shown in Fig. 6, in one of embodiments, the positive output terminals of each of the DC/DC converters 31, 32, 33 and 131, 132 are connected together and are connected to the positive input terminal of an initial or preliminary system 141 of Fig. 7 of the alternating current generating module 40, 140, and the negative output terminals of each of the DC/DC converters 31, 32, 33 and 131, 132 are connected together and are connected to the negative input terminal of the initial or preliminary system 141 of Fig. 7 of the alternating current generating module 40, 140.

Fig. 7 shows a schematic diagram of one of embodiments of the initial or preliminary system 141 of the alternating current generating module 40 of the electric energy generating and converting system 1 shown in Fig. 1 and/or of the alternating current generating module 140 of the electric energy generating and converting system 101 shown in Fig. 2. The structure and principle of operation of the initial or preliminary system 141 of the alternating current generating module 40 of the electric energy generating and converting system 1 is similar to the structure of the converter shown in Fig. 3B of the publication EP 3657652 A1 of the patent application entitled "Photovoltaic module".

One embodiment of the initial or preliminary system 141 of the alternating current generating module 40, 140 of the electric energy generating and converting system 1, which is a converter which increases an input voltage VB with the value from 60,0 V to 100,0 V of the direct current at the input 301 to a higher level output voltage VC with the value from 300,0 V to 500,0 V of the direct current at an output 338, comprises an input capacitor 322, ends of which are connected to terminals VB1 and VB2 of the input 301, and two input resistors 323, 324 connected in series to form a voltage divider, free ends of which are connected to the terminals VB1 and VB2 of the input 301. One of the terminals VB1 of the input 301 is further connected to a drain D of the gallium nitride transistor 325 and to a drain D of the gallium nitride transistor 327, while a source S of the gallium nitride transistor 325 is connected to a drain D of the gallium nitride transistor 326, and a source S of the gallium nitride transistor 327 is connected to a drain D of the gallium nitride transistor 328, and a source S of the gallium nitride transistor 326 and a source S of the gallium nitride transistor 328 are connected to the terminal VB2 of the input 301. A connection point of the source S of the gallium nitride transistor 327 to the drain D of the gallium nitride transistor 328 is connected to one end of a primary winding of a transformer Tr1 marked by indication 330, and the other end of the primary winding of the transformer Tr1 330 is connected via a middle capacitor 329 to the connection point of the source S of the gallium nitride transistor 325 to the drain D of the gallium nitride transistor 326. In turn, one end of a secondary winding of the transformer Tr1 330 is connected to a connection point of a source S of a gallium nitride transistor 332 and a drain D of a gallium nitride transistor 334, while the remaining end of the secondary winding of the transformer Tr1 330 is connected via the internal capacitor 331 to a source S of the gallium nitride transistor 334 and to one of terminals VC2 of the output 338. A drain D of the gallium nitride transistor 332 is connected to a remaining terminal VC1 of the output 338. Furthermore, one of embodiments of the initial or preliminary system 141 of the alternating current generating module 40, 140 of the electric energy generating and converting system 1 comprises an output capacitor 335, the ends of which are connected to the terminals VC1 and VC2 of the output 338, and two output resistors 336, 337 connected in series, which form a voltage divider, and the free ends of which are connected to the terminals VC1 and VC2 of the output 338.

Fig. 8 shows a schematic diagram of one of embodiments of an end stage or an end system 142 of the alternating current generating module 40 of the electric energy generating and converting system 1 shown in Fig. 1 and/or the alternating current generating module 140 of the electric energy generating and converting system 101 shown in Fig. 2. The structure and principle of operation of the final system 141 of the alternating current generating module 40 of the electric energy generating and converting system 1 is similar to the structure of the converter shown in Fig. 4 of the publication EP 3657652 A1 of the patent application entitled "Photovoltaic module".

One of embodiments of the final system 142 of the alternating current generating module 40, 140 of the electric energy generating and converting system 1 is a converter which converts an input voltage VC with the value from 300,0 V to 500,0 V of the direct current at an input 341 to an output voltage VD with the value from 190,0 V to 250,0 V of the alternating current at an output 359, which comprises an input capacitor 342, the ends of which are connected to terminals VC1 and VC2 of the input 341. Furthermore, drains D of the gallium nitride transistors 343 and 345 are connected to the terminal VC1 of the input 341, sources S of which are connected to drains D of the gallium nitride transistors 344 and 346. Sources S of the gallium nitride transistors 344 and 346 are connected to the terminal VC2 of the input 341. A connection point of a source S of the gallium nitride transistor 343 and the drain D of the gallium nitride transistor 344 is connected via series-connected secondary windings of compensating transformers LD2 353 and LD3 355 to a neutral terminal N VD2 of an output VD 359. In turn, a connection point of a source S of the gallium nitride transistor 345 and the drain D of the gallium nitride transistor 346 is connected via a coil 351 of a choke LD1 and the series-connected primary windings of the compensating transformers LD2 353 and LD3 355 and via the disconnector SP1 357 to the phase terminal L VD1 of the output VD 359. A capacitor 352 is connected between a beginning of the primary winding of the compensating transformer LD2 353 and a beginning of the secondary winding of the compensating transformer LD2 353, whereas a capacitor 354 is connected between a beginning of the primary winding of the compensating transformer LD3 355 and a beginning of the secondary winding of the compensating transformer LD3 355, and a capacitor 356 is connected between the end of the primary winding of the compensating transformer LD3 355 and the end of the secondary winding of the compensating transformer LD3 355, which together with the compensating transformers LD2 353 and LD3 355 reduce the fluctuation or ripple of the sinusoidal alternating current waveform at the output VD of the system 142.

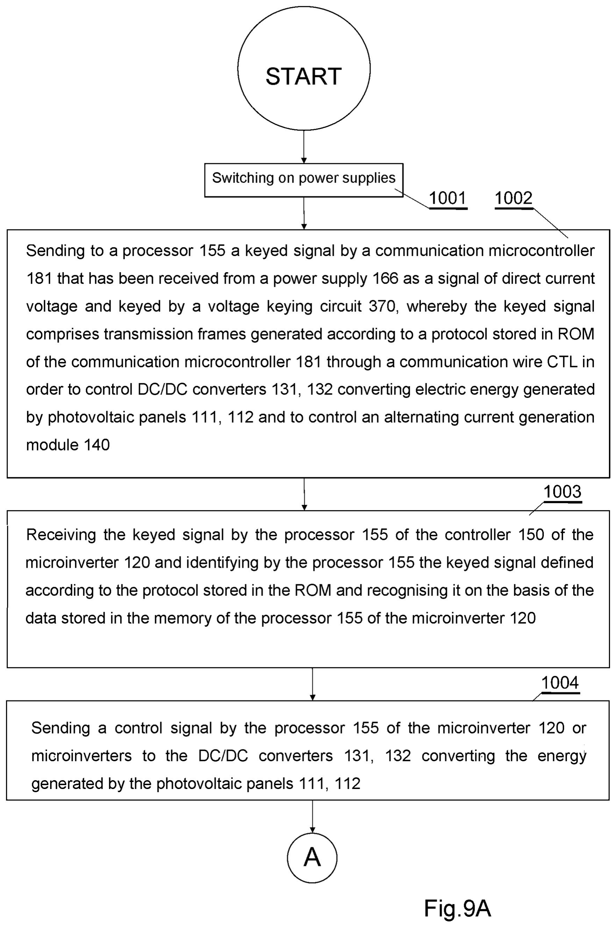

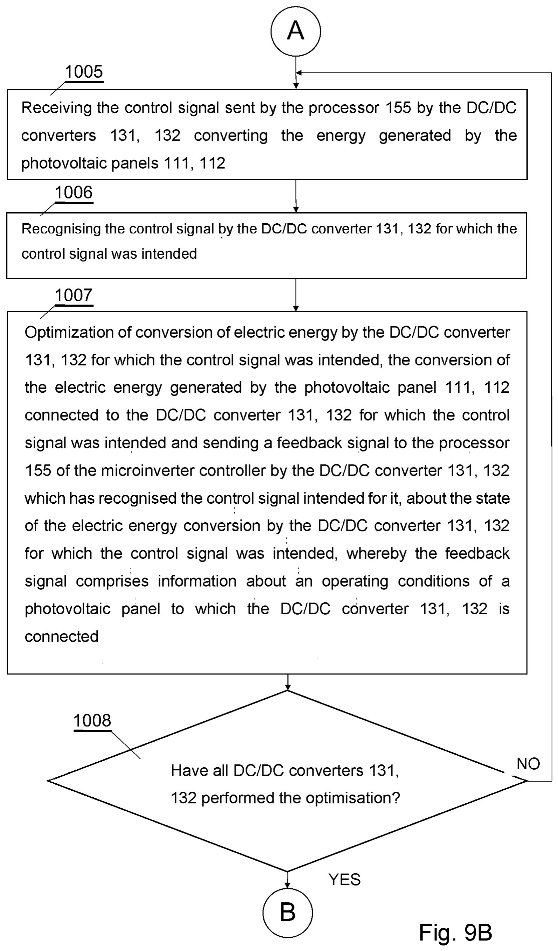

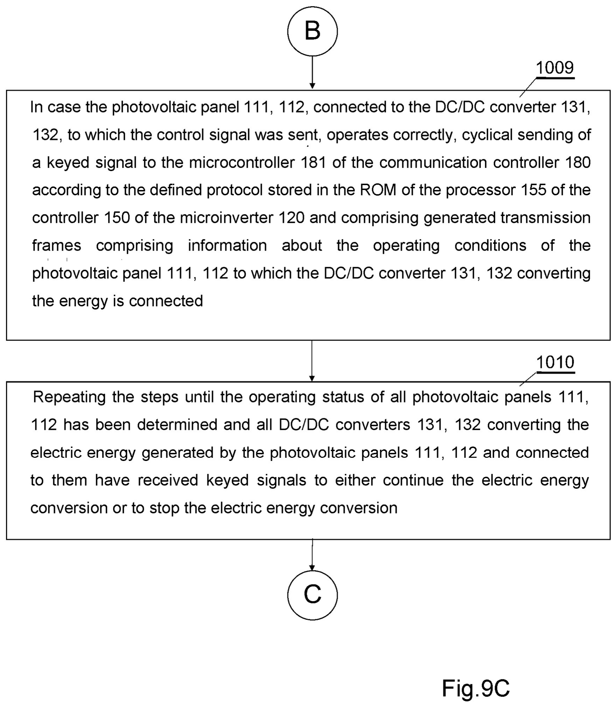

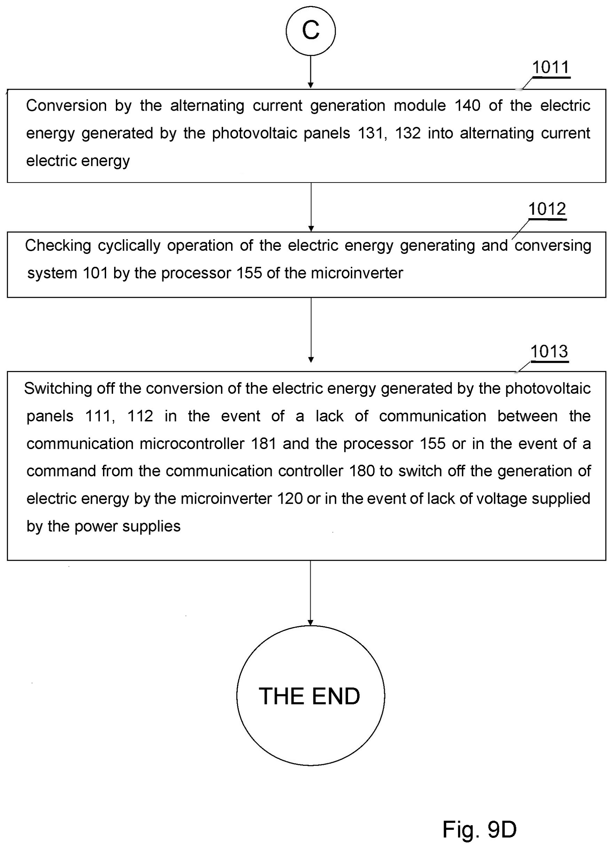

Figs 9A, 9B, 9C and 9D show a block diagram of a method of electric energy generating and converting, particularly converting electric energy using an electric energy generating and converting system with wired communication. In one of embodiments, in the method for the electric energy generating and converting using the electric energy generating and converting system 1, 101 having electric devices 11, 12, 13 and 111, 112, the microinverter 20, 120, the communication controller 80, 180 with the interface 99, 199 enabling communication with a user, the wired communication 70, 170, 270 for transmitting communication signals controlling the operation of the electric energy generating and converting system 1, 101 of the electric devices and transmitting between a microinverter controller processor of the electric energy generating and converting system 1, 101 of the electric devices which generate direct current electric energy and the communication controller, and power supplies 161, 162, 166, the microinverter 20, 120 converts the direct current electric energy generated by the electric devices 11, 12, 13 and 111, 112 into alternating current electric energy. In one of embodiments, the inverter 20, 120 comprises converters 31, 32, 33 and 131, 132, each of which is connected to the electric device 11, 12, 13 and 111, 112, respectively, assigned to it, the alternating current generating module 40, 140 having the positive input terminal and the negative input terminal, wherein positive output terminals of each of the DC/DC converters 31, 32, 33 and 131, 132 being connected to each other and being connected to the positive input terminal of the alternating current generating module 40, 140, and negative output terminals of each of the DC/DC converters 31, 32, 33 and 131, 132 being connected to each other and being connected to the negative input terminal of the alternating current generating module 40, 140, and a power supply module 60, 160, and a controller 50, 150 of the microinverter 20, 120 which is connected to the alternating current generating module 40, 140 and the power supply module 60, 160. In turn, the wired communication 70, 170, 270 for transmitting communication signals controlling the operation of the electric energy generating and converting system 1, 101 of the electric devices and transmitted between a microinverter controller processor of the electric energy generating and converting system 1, 101 of the electric devices which generate direct current electric energy and the communication controller, in one of embodiments, comprises a communication microcontroller being a communication processor of the communication controller, electric and electronic units and electric wires forming branches of electric circuits and connecting the electric and electronic units to pins or connectors of the communication processor of the communication controller and to pins or connectors of the microinverter controller processor, and the direct current power supply system of the communication controller.

Moving on to the method of the electric energy generating and converting after start in step 1001, the power supply 161, 162, 166 are switched on, in step 1002, a keyed signal is sent by the communication microcontroller 81, 181 keyed by the voltage keying system 370 keyed from the direct current voltage of the power supply 166 to the processor 55, 155, wherein the keyed signal comprises generated transmission frames or otherwise transmission packets according to the protocol stored in the ROM of the processor 81 or the communication microcontroller 181, via the CTL communication line in order to control the DC/DC converters 31, 32, 33, 131, 132 converting the energy generating by the photovoltaic panels 11, 12, 13, 111, 112 and to control the alternating current generating module 40, 140. In one of embodiments, the protocol is a UART protocol. After sending the keyed signal by the communication microcontroller 81, 181, in step 1003, the keyed signal is received by the processor 55, 155 of the controller 50, 150 of the microinverter 20, 120, after which the processor 55, 155 identifies the keyed signal defined according to the protocol stored in the ROM memory and recognized based on data stored in a memory of the processor 55, 155 of the controller 50, 150 of the microinverter 20, 120, and in step 1004, the processor 55, 155 of the controller 50, 150 of the microinverter or microinverters 20, 120 sends the control signal to the DC/DC converters 31, 32, 33, 131, 132 that convert the energy generated by the photovoltaic panels 11, 12, 13, 111, 112. Then, in step 1005, the control signal sent by the processor 55, 155 is received by the DC/DC converters 31, 32, 33, 131, 132 converting the energy generated by the photovoltaic panels 11, 12, 13, 111, 112, and in step 1006, the control signal is recognized by the DC/DC converter 31, 32, 33, 131, 132 to which the control signal was intended. In step 1007, a cyclical optimization of the converting of the electric energy by the DC/DC converter 31, 32, 33, 131, 132 to which the control signal was intended is carried out, and a feedback signal is sent to the processor 55, 155 of the controller 50, 150 of the microinverter 20, 120 by the DC/DC converter 31, 32, 33, 131, 132, which recognized the control signal intended for it, about the state of the converting of the electric energy by the DC/DC converter 31, 32, 33, 131, 132 to which the control signal was intended, wherein the feedback signal comprises information about the operating state of the photovoltaic panel to which the DC/DC converter 31, 32, 33, 131, 132 is connected. After checking in step 1008 whether all DC/DC converters 31, 32, 33, 131, 132 have carried out, in step 1009, if the photovoltaic panel 11, 12, 13, 111, 112 connected to the DC/DC converter 31, 32, 33, 131, 132 to which the control signal was sent is working correctly, the keyed signal is sent cyclically to the processor 81 or the microcontroller 181 of the communication controller 80, 180 according to the defined protocol stored in the ROM memory of the processor 55, 155 of the controller 50, 150 of the microinverter 20, 120 and comprising generated frames or data transmission packets comprising information on the operating state of the photovoltaic panel 11, 12, 13, 111, 112 to which the DC/DC converter 31, 32, 33, 131, 132 for converting energy is connected, and then in step 1010 the above-mentioned steps are repeated until the operating state of all photovoltaic panels 11, 12, 13, 111, 112 has been determined and all DC/DC converters 31, 32, 33, 131, 132 for converting the energy generated by the photovoltaic panels 11, 12, 13, 111, 112 and connected thereto receive keyed signals to continue converting the energy or to stop converting the energy. In one of embodiments, the protocol is the UART protocol. In step 1011, converting the electric energy generated by the photovoltaic panels 11, 12, 13, 111, 112 into alternating current electric energy by the alternating current generating module 40 is taking place, and in step 1012, the operation of the electric energy generating and converting system 1, 101 by the processor 55, 155 of the controller 50, 150 of the microinverter 20, 120 is cyclically checked. In the event of a lack of communication between the processor 81 or the communication microcontroller 181 and the processor 55, 155 of the controller 50, 150 of the microinverter 20, 120, or in the event of a command from the communication controller 80, 180 to switch off the generating electric energy by the microinverter 20, 120, or in the event of a lack of the voltage supplied by the power supplies, in step 1013 the converting of electric energy generated by the photovoltaic panels 11, 12, 13, 111, 112 is switched off.

All steps of the method described above are performed by the processors 55 and 81 or the processor 155 and the communication microcontroller 181 thanks to the software of the processors 55 and 81 or the processor 155 and the communication microcontroller 181 stored on a medium or media usable by the processors 55 and 81 or the processor 155 and the communication microcontroller 181, comprising the software readable by the processors 55 and 81 or the processor 155 and the communication microcontroller 181.

## Claims

1. A wired communication being a unit of an electric energy generating and converting system (1, 101), the electric energy produced or generated by electric devices (11, 12, 13, 111, 112), the system (1, 101) comprising
the electric devices (11, 12, 13 and 111, 112),
a microinverter (20, 120) converting the electric energy generated by the electric devices (11, 12, 13 and 111, 112) and comprising
DC/DC converters (31, 32, 33 and 131, 132), each of which is connected to the electric device (11, 12, 13 and 111, 112, respectively), assigned to it,
an alternating current generating module (40, 140) that generates electric energy with parameters corresponding to parameters of a power grid from direct current electric energy and has a positive input terminal and a negative input terminal, wherein positive output terminals of each of the DC/DC converters (31, 32, 33 and 131, 132) are connected together and are connected to a positive input terminal of the alternating current generating module (40, 140), and negative output terminals of each of the DC/DC converters (31, 32, 33 and 131, 132) are connected together and are connected to a negative input terminal of the alternating current generating module (40, 140),
a power supply module (60, 160), and
a controller (50, 150) of a microinverter (20, 120), that is coupled to the alternating current generating module (40, 140) and the power supply module (60, 160),
wherein the wired communication is used for transmitting communication signals controlling operation of the electric energy generating and converting system (1, 101), the electric energy generated by the electric devices (11, 12, 13, 111, 112), and transmitted between a processor (55, 155) comprising ROM and RAM memory of the controller (50, 150) of the microinverter of the electric energy generating and converting system (1, 101), the electric energy generated by the electric devices (11, 12, 13, 111, 112) which generate direct current electric energy, and a communication controller (80, 180), wherein the wired communication comprises a communication microcontroller being a communication processor (81, 181) comprising a communication controller the ROM and RAM memory, electric and electronic units and electrical wires forming branches of electric circuits (275 and 285, 260 and 360) and connecting the electric and electronic units to pins or connectors of the communication processor (81, 181) of the communication controller (80, 180) and to pins or connectors of the processor (55, 155) of the microinverter controller (50, 150), and the power supply module (60, 160) for powering the microinverter controller (50, 150) and a power supply (166) for powering the communication controller,
**characterized in that** the branches of electric circuits are
a communication transmitting branch (275) of the communication controller (180) and a control receiving branch (260) of the microinverter controller, which together with an electric neutral wire (N) and a bidirectional communication electric wire (CTL) form a communication line transmitting a communication signal TX from a transmitting pin (MTX) of the communication microcontroller to a receiving pin (RX) of the processor (155) of the controller (150) of the microinverter (120),
a control transmitting branch (360) of the controller (150) of the microinverter (120) and a communication receiving branch (285) of the communication controller, which together with the electric neutral wire (N) and the bidirectional communication electric wire (CTL) form a communication line transmitting a communication signal TX from a transmitting pin (TX) of the communication microcontroller to a receiving pin (MRX) of the communication controller,
wherein the electric and electronic units belonging to the electric circuit branches (275 and 285, 260 and 360) are
a keying system (370) belonging to the communication transmitting branch (275) of the communication controller and comprising a PWM modulator which receives a signal from the communication microcontroller and which is powered or supplied from an AC/DC power supply, referred to as a communication microcontroller power supply (166), with the direct current having a voltage of value from 5,0 V to 50,0 V, which is keyed by the keying system (370) and is transmitted as a PWM signal from the communication microcontroller to the processor (155) of the controller (150) of the microinverter (120),
a resistor (290) belonging to the communication receiving branch (285) of the communication controller (180), on which voltage is built-up and caused by the current flow through the resistor (290) caused by the control signal sent by the processor (155) of the controller (150) of the microinverter (120), and which is transmitted to a receiving pin of the processor (181) of the communication controller (180) having the ROM and RAM memory,
a resistor (268) belonging to the control receiving branch (260) of the controller (150) of the microinverter (120) from which a communicating signal is sent via a resistor (263) to a receiving pin of the processor of the controller (150) of the microinverter (120) receiving the RX signal and from which the PWM signal is transmitted in the communication electric wire (CTL) with bidirectional communication via the communication controller (180),
a set (368) of amplifying transistor systems (266, 361) belonging to the control transmitting branch (360) amplifying the TX communication signal received from a transmitting pin (TX) of the microinverter controller (150) and transmitted via the bidirectional communication line (CTL) to a communication controller (280).

2. The wired communication according to claim 1, **characterized in that** an electric energy converting blocking device (95) is provided in the communication electric wire (CTL).

3. An electric energy generating and converting system (1, 101), according to claim 1, comprising
electric devices (11, 12, 13 i 111, 112),
a microinverter (20, 120) converting electric energy generated by the electric devices (11, 12, 13 and 111, 112) and comprising
DC/DC converters (31, 32, 33 and 131, 132), each of which is connected to the electric device (11, 12, 13 and 111, 112, respectively), assigned to it,
an alternating current generating module (40, 140) that generates electric energy with parameters corresponding to parameters of a power grid from direct current electric energy and has a positive input terminal and a negative input terminal, wherein positive output terminals of each of the DC/DC converters (31, 32, 33 and 131, 132) are connected together and are connected to the positive input terminal of the alternating current generating module (40, 140), and negative output terminals of each of the DC/DC converters (31, 32, 33 and 131, 132) are connected together and are connected to the negative input terminal of the alternating current generating module (40, 140),
a power supply module (60, 160), and
a controller (50, 150) of a microinverter (20, 120), that is coupled to the alternating current generating module (40, 140) and the power supply module (60, 160),
a communication controller (80, 180) with an interface (99, 199) enabling communication with a user,
a wired communication (70, 170, 270) for transmitting communication signals controlling the operation of the electric devices of the electric energy generating and converting system (1, 101), the communication signals transmitted between a microinverter controller processor of the electric energy generating and converting system (1, 101), the electric energy generated by the electric devices which generate direct current electric energy, and a communication controller, wherein the wired communication comprises a communication microcontroller being a communication processor of the communication controller, electric and electronic units and electrical wires forming branches of electric circuits and connecting the electric and electronic units to pins or connectors of the communication processor of the communication controller and to pins or connectors of the processor of the microinverter controller, and a direct current power supply system of the communication controller, **characterized in that** the branches of electric circuits are a communication transmitting branch (275) of the communication controller (180) and a control receiving branch (260) of the microinverter controller, which together with an electric neutral wire (N) and a bidirectional communication electric wire (CTL) form a communication line transmitting a communication signal TX from a transmitting pin (MTX) of the communication microcontroller to a receiving pin (RX) of the processor (155) of the controller (150) of the microinverter (120),
a control transmitting branch (360) of the controller (150) of the microinverter (120) and a communication receiving branch (285) of the communication controller, which together with the electric neutral wire (N) and the bidirectional communication electric wire (CTL) form a communication line transmitting a communication signal TX from a transmitting pin (TX) of the communication microcontroller to a receiving pin (MRX) of the communication controller,
wherein the electric and electronic units belonging to the electric circuit branches (275 and 285, 260 and 360) are
a keying system (370) belonging to the communication transmitting branch (275) of the communication controller and comprising a PWM modulator which receives a signal from the communication microcontroller and which is powered or supplied from an AC/DC power supply referred to as a communication microcontroller power supply (166) with the direct current having a voltage of value from 5,0 V to 50,0 V, which is keyed by the keying system (370) and is transmitted as a PWM signal from the communication microcontroller to the processor (155) of the controller (150) of the microinverter (120),
a resistor (290) belonging to the communication receiving branch (285) of the communication controller (180), on which voltage is built-up and caused by the current flow through the resistor (290) caused by the control signal sent by the processor (155) of the controller (150) of the microinverter (120), and which is transmitted to a receiving pin of the processor (181) of the communication controller (180) having the ROM and RAM memory,
a resistor (268) belonging to the control receiving branch (260) of the controller (150) of the microinverter (120) from which a communicating signal is sent via a resistor (263) to a receiving pin of the processor of the controller (150) of the microinverter (120) receiving the RX signal and from which the PWM signal is transmitted in the communication electric wire (CTL) with bidirectional communication via the communication controller (180),
a set (368) of amplifying transistor systems (266, 361) belonging to the control transmitting branch (360) amplifying the TX communication signal received from a transmitting pin (TX) of the microinverter controller (150) and transmitted via the bidirectional communication line (CTL) to a communication controller (280).

4. The electric energy generating and converting system (1, 101), according to claim 3, **characterized in that** the control receiving branch (260) comprises the resistor (268) through which a PWM digital electric signal is transmitted in a communication line (CTL) from the communication microcontroller (280) and which is connected at one end to a photoemitter of an optocoupler (267), preferably an LED diode, and at another end is connected to the neutral communication line (N), wherein a photodetector of the optocoupler (267), preferably a phototransistor, is connected at one end to the terminal -UK and at another end is connected through the resistor (263) to the pin of the processor (155) of the controller (150) of the microinverter (120) receiving the RX signal.

5. The electric energy generating and converting system (1, 101), according to claim 3, **characterized in that** the control transmitting branch (360) comprises a set (368) of amplifying transistor circuits (266, 361) which amplifies the signal fed to the photoemitter, preferably an LED diode, an optocoupler (367) and generated in the photodetector, preferably a phototransistor, of the optocoupler (367), wherein one end of the photodetector of the optocoupler (367) is connected to the communication line (CTL) and another end of the photodetector of the optocoupler (367) is connected to one end of a resistor (362) limiting a gate (G) current of an amplifying transistor (361), to which it is connected by its remaining end, and a gate (G) of the amplifying transistor (361) is connected via a resistor (363) to a source (S) of the amplifying transistor (361), which is connected to the neutral wire (N), while a drain (D) of the amplifying transistor (361) is connected via a resistor (364) to the end of the resistor (268) at the point where the control receiving branch (260) and the control transmitting branch (360) connect to each other and become the communication line (CTL) through which the PWM electric signal is received from the communication controller (181), and the photoemitter, preferably the LED, of the optocoupler (367) is connected at one end to a positive terminal +UK of the direct current source via an impedance coil (261) and a resistor (269) limiting a rising current of a digital signal and, and at the other end is connected to a drain (D) of a transistor (266), preferably an n-type field effect transistor or an npn silicon transistor, and a gate (G) of the transistor (266) is connected via a resistor (264) to the TX signal transmitting pin of the microinverter controller processor and to one end of a resistor (265), which acts as a blocking element for the operation of the transistor (266), and another end of the resistor (265) is connected to a source (S) and gate (G) of the field effect transistor (266) and to a -UK terminal of the direct current source to which via a capacitor (262) a junction point of the resistor (269) and the impedance coil (261) is connected.

6. The electric energy generating and converting system (1, 101), according to claim 3, **characterized in that** the transmitting branch (275) of the communication controller comprises the AC/DC power supply (166) having an input (UM1) and generating an output of a DC voltage of value from 5,0 V to 50,0 V, to terminals of which a capacitor (271) is connected, which filters noise from the power supply (166) reducing the fluctuation of the voltage waveform at the output of the AC/DC power supply (166), wherein a positive output terminal (UM3) with a voltage of value from 5,0 V to 50,0 V, preferably 10,0 V, of the power supply (166) is connected to an emitter (E) of a keying transistor (273) which keys the PWM signal, and to one end of a resistor (272) which blocks a work of the keying transistor (273), causing the transistor (273) to be switched off when the optocoupler (277) is not switched on causing the conduction of the transistor (273) to be switched off when the optocoupler (277) is not switched on, and another end of the resistor (272) is connected to a base (B) of the keying transistor (273), which is connected via a resistor (274) to one end of the photodetector of the optocoupler (277), wherein the optocoupler (277) is switched on by applying the TX signal having the voltage of value from 3,0 V to 6,0 V, preferably 3,3 V, from the communication microcontroller (81, 181) of the communication controller (80, 180), which causes switching on the keying transistor (273) into the conduction state and applying the voltage of value from 5,0 V to 50,0 V, preferably 10,0 V, from the communication microcontroller (81, 181) of the communication controller (80, 180) of the microinverter (20, 120) to the CTL line according to the PWM modulation of the TX signal.

7. The electric energy generating and converting system (1, 101), according to claim 3, **characterized in that** the communication receiving branch (285) comprises the resistor (290), on which the voltage is built-on in the case of loading the (CTL) communication line with the PWM signal loading the (CTL) line with respect to the neutral wire (N), causes switch on the photoemitter, preferably the LED diode, of the optocoupler (477), and the PWM signal with a voltage (UM2) of value from 3,0 V to 6,0 V, preferably 3,3 V, caused by the voltage drop on the resistor (290), to be transmitted from the resistor (279) to the communication microcontroller (181) of the communication controller (180) via the RX line connected to one of the ends of the photodetector, preferably the phototransistor, of the optocoupler (477), wherein the photoemitter, preferably the LED diode, of the optocoupler (477) is connected with one end to the communication line (CTL) and with another end to a collector (K) of the transistor (273), and that the communication receiving branch (285) further comprises wires (255, 256) connected to ends of the photoemitter, preferably the LED diode, of the optocoupler (477).

8. The electric energy generating and converting system (1, 101), according to claim 3, **characterized in that** the electric devices are batteries or dynamos that generate direct current electric energy.

9. The electric energy generating and converting system (1, 101), according to claim 3, **characterized in that** the electrical devices are generators that generate direct current electric energy.

10. The electric energy generating and converting system (1, 101), according to claim 3 or 4 or 5, **characterized in that** in the electric communication wire (CTL) there is a blocking device (95) which blocks an electric energy converting.

11. A method for generating and converting electric energy, the electric energy generated and converted by means of an electric energy generating and converting system (1, 101), according to claim 3, comprising
electric devices (11, 12, 13 and 111, 112),
a microinverter (20, 120) converting the electric energy generated by the electric devices (11, 12, 13 and 111, 112) and comprising
converters (31, 32, 33 and 131, 132), each of which is connected to the electric device (11, 12, 13 and 111, 112, respectively), assigned to it,
DC/DC converters (31, 32, 33 and 131, 132), each of which is connected to the electric device (11, 12, 13 and 111, 112, respectively), assigned to it,
an alternating current generating module (40, 140) that generates electric energy with parameters corresponding to parameters of a power grid from direct current electric energy and has a positive input terminal and a negative input terminal, wherein positive output terminals of each of the DC/DC converters (31, 32, 33 and 131, 132) are connected together and are connected to the positive input terminal of the alternating current generating module (40, 140), and negative output terminals of each of the DC/DC converters (31, 32, 33 and 131, 132) are connected together and are connected to the negative input terminal of the alternating current generating module (40, 140),
a power supply module (60, 160), and
a controller (50, 150) of a microinverter (20, 120), that is coupled to the alternating current generating module (40, 140) and the power supply module (60, 160),
a communication controller (80, 180) with an interface (99, 199) enabling communication with a user,
a wired communication (70, 170, 270), according to claim 1, for transmitting communication signals controlling the operation of the electric energy generating and converting system (1, 101), the electric energy generating by the electric devices, and transmitted between a communication controller and a microinverter controller processor of the electric energy generating and converting system (1, 101), the electric energy generating by the electric devices that generate direct current electric energy, wherein the wired communication comprises a communication microcontroller being a communication processor of the communication controller, electric and electronic units and electrical wires forming branches of electric circuits and connecting the electric and electronic units to pins or connectors of the communication processor of the communication controller and to pins or connectors of the processor of the microinverter controller and a direct current power supply system of the communication controller, **characterized in that** the method comprising the following steps
switching on power supplies (161, 162, 166),
sending a keyed signal to a processor (55, 155) by a communication microcontroller (81, 181) and keyed by the voltage keying system (370) keyed from the direct current voltage of the power supply (166), wherein the keyed signal comprises generated data transmission packets according to a protocol stored in ROM memory of the processor (81) or the communication microcontroller (181), via a communication line (CTL) in order to control the DC/DC converters (131, 132) converting the energy generating by the photovoltaic panels (11, 12, 13, 111, 112) and to control the alternating current generating module (40, 140),
receiving the keyed signal by the processor (55, 155) of the controller (50, 150) of the microinverter (20, 120) and identifying by the processor (55, 155) the keyed signal defined according to the protocol stored in the ROM memory and recognized on the basis of data stored in the memory of the processor (55, 155) of the controller (50, 150) of the microinverter (20, 120),
sending a control signal by the processor (55, 155) of the controller (50, 150) of the microinverter or microinverters (20, 120) to the DC/DC converters (31, 32, 33, 131, 132) converting the energy generated by the photovoltaic panels (11, 12, 13, 111, 112),
receiving the control signal sent by the processor (55, 155) by the DC/DC converters (31, 32, 33, 131, 132) converting the energy generated by the photovoltaic panels (11, 12, 13, 111, 112),
recognizing the control signal by the DC/DC converter (31, 32, 33, 131, 132) to which the control signal was intended,
a cyclical optimization of converting the electric energy by the DC/DC converter (31, 32, 33, 131, 132) to which the control signal was intended, converting the energy generated by the photovoltaic panel (11, 12, 13, 111, 112) connected to the DC/DC converter (31, 32, 33, 131, 132) converting the electrical energy, to which the control signal was intended and sending a feedback signal to the processor (55, 155) of the controller (50, 150) of the microinverter (20, 120) through the DC/DC converter (31, 32, 33, 131, 132) which recognized the control signal intended to it, about the state of the converting of the electric energy by the DC/DC converter (31, 32, 33, 131, 132) to which the control signal was intended, wherein the feedback signal comprises information about the operating state of the photovoltaic panel to which the DC/DC converter (31, 32, 33, 131, 132) is connected,
in the case when the photovoltaic panel (11, 12, 13, 111, 112), connected to the DC/DC converter (31, 32, 33, 131, 132), to which the control signal was sent, is working correctly, sending cyclically to the processor (81) or the microcontroller (181) of the communication controller (80, 180) the keyed signal defined according to the protocol stored in the ROM memory of the processor (55, 155) of the controller (50, 150) of the microinverter (20, 120) and comprising generated data transmission packets comprising information on the operating state of the photovoltaic panel (11, 12, 13, 111, 112), to which the DC/DC converter (31, 32, 33, 131, 132) for converting energy is connected,
repeating the steps until the operating state of all photovoltaic panels (11, 12, 13, 111, 112) has been determined and all DC/DC converters (31, 32, 33, 131, 132) for converting the energy generated by the photovoltaic panels (11, 12, 13, 111, 112) and connected thereto receive keyed signals to continue converting the energy or to stop converting the energy,
converting of the electricity generated by the photovoltaic panels (11, 12, 13, 111, 112) into alternating current electric energy by the alternating current generating module (40, 140),
cyclical checking of the electric energy generating and converting system (1, 101) by the processor (55, 155) of the controller (50, 150) of the microinverter (20, 120),
switching off the converting of electric energy generated by the photovoltaic panels (11, 12, 13, 111, 112) in the event of a lack of communication between the processor (81) or the communication microcontroller (181) and the processor (55, 155) of the controller (50, 150) of the microinverter (20, 120) or in the event of a command issued by the communication controller (80, 180) to switch off the generating of electric energy by the microinverter (20, 120) or in the event of a lack of voltage supplied by the power supplies.

12. A method for controlling an electric energy generating and converting system (101), according to claim 3, by means of signals transmitted via wires and/or radio signals according to claim 11, wherein electric devices are photovoltaic panels (131, 132), whereas electric energy converting systems and control systems for controlling the electric devices that are connected to the electric devices via electric wires and that transmit and/or receive electric signals via wired and/or radio communication are devices comprised in a microinverter (120) comprising
DC/DC converters (131, 132) for converting energy from the photovoltaic panels (111, 112), each of the DC/DC converters (131, 132) for converting energy is assigned to one photovoltaic panel (111, 112),
an alternating current generating module (40, 140) which generates electric energy with parameters corresponding to parameters of a power grid and which is connected to DC/DC converters (131, 132) that convert electric energy generated by photovoltaic panels,
a power supply module (160),
a microinverter controller (150) comprising a processor (155) with ROM and RAM memory and communicating with the DC/DC converters (131, 132) that convert electric energy generated by the photovoltaic panels (111, 112), and with the alternating current generating module (140) which generates electric energy having parameters corresponding to parameters of a power grid,
wherein the control systems are furthermore a communication controller (180) comprising
a communication microcontroller (181),
AC/DC power supply (166) or DC power supply and
a voltage keying system (275),
whereas the wired communication according to claim 1 comprises
a communication wire (CTL),
a neutral wire (N) and
opto-isolators,
the method **characterized in that** comprises the following steps:
switching on power supplies,
sending a keyed signal to the processor (155) by the communication microcontroller (181), keyed by the voltage keying system (370) that keys a direct current voltage of the power supply (166), wherein the keyed signal comprises generated transmission frames or transmission packets according to a protocol stored in the ROM of the communication microcontroller (181), via the (CTL) communication line in order to control the DC/DC converters (131, 132) converting the energy generated by the photovoltaic panels (111, 112), that are used for controlling the alternating current generating module (140),
receiving the keyed signal by the processor (155) of the controller (150) of the microinverter (120) and identifying by the processor (155) the keyed signal defined according to the protocol stored in the ROM memory and recognized on the basis of data stored in the memory of the processor (155) of the controller (150) of the microinverter (120),
sending a control signal by the processor (155) of the microinverter controller (150) or microinverters (120) to the DC/DC converters (131, 132) converting the energy generated by the photovoltaic panels (111, 112),
receiving the control signal sent by the processor (155) by the DC/DC converters (131, 132) converting the energy generated by the photovoltaic panels (111, 112),
recognizing the control signal by the DC/DC converter (131, 132) to which the control signal was intended,
a cyclical optimization of converting the electric energy by the DC/DC converter (131, 132) to which the control signal was intended and converting the electric energy generated by the photovoltaic panel (111, 112) connected to the DC/DC converter (131, 132) converting the electric energy to which the control signal was intended and sending a feedback signal to the processor (155) of the controller (150) of the microinverter (120) through the DC/DC converter (131, 132) which recognized the control signal intended for it, about the state of the converting of the electric energy by the DC/DC converter (131, 132) to which the control signal was intended, wherein the feedback signal comprises information about the operating state of the photovoltaic panel to which the DC/DC converter (131, 132) is connected,
in case when the photovoltaic panel (111, 112) connected to the DC/DC converter (131, 132), to which the control signal was sent, operates correctly, cyclically sending to the microcontroller (181) of the communication controller (180) the keyed signal defined according to the protocol stored in the ROM memory of the processor (155) of the controller (150) of the microinverter (120) and comprising generated transmission packets comprising information on the operating state of the photovoltaic panel (111, 112) to which the DC/DC converter (131, 132) converting the energy is connected,
repeating the steps until the operating state of all photovoltaic panels (111, 112) is determined and all DC/DC converters (131, 132) converting the electric energy generated by the photovoltaic panels (111, 112) and connected thereto will receive keyed signals to continue converting the electric energy or to stop converting the electric energy,
converting the electric energy generated by the photovoltaic panels (111, 112) into alternating current electric energy by the alternating current generating module (140),
a cyclical checking of the operation of the electric energy generating and converting system (101) by the processor (155) of the controller (150) of the microinverter (120),
switching off the converting the electric energy generated by the photovoltaic panels (111, 112) in the event of a lack of communication between the communication microcontroller (181) and the processor (155) of the controller (150) of the microinverter (120) or in the event of a command issued by the communication controller (180) to switch off the generation of electric energy by the microinverter (120) or in the event of a lack of voltage supplied by the power supplies.

13. The method according to claim 11 or 12, **characterized in that** the lack of communication between the processor (81) or the communication microcontroller (181) and the processor (55, 155) of the controller (50, 150) of the microinverter (20, 120) is caused by means of a electric energy converting blocking device (95).

14. The method according to claim 11, **characterized in that** electric devices are batteries or direct current electric energy generators.

15. Software of processors (55 and 81) or a processor (155) and a communication microcontroller (181) stored on a medium or media usable by the processors (55 and 81) or the processor (155) and the communication microcontroller (181), comprising the software readable by the processors (55 and 81) or the processor (155) and the communication microcontroller (181), which, when executed, causes the processors (55 and 81) or the processor (155) and the communication microcontroller (181) performs/perform all the steps of the method of claim 11 or 12 or 13 or 14.
